# EUROPEAN PATENT APPLICATION

(11) **EP 1 818 668 A1**
(43) Date of publication of application: **15.08.2007**
(21) Application number: 06002682.0
(22) Date of filing: 09.02.2006
(51) Int. Cl.: G01N 21/55, G01N 21/64

(54) **Long range surface plasmon fluorescence spectroscopy for bio-affinity studies**

(71) Applicant: Max-Planck-Gesellschaft zur Förderung der Wissenschaften e.V., 80539 München (DE)
(72) Inventor: Knoll, Wolfgang Prof. Dr., 55124 Mainz (DE); Kasry, Amal, 55127Mainz (DE)
(74) Representative: Dey, Michael

(57) **Abstract**

The present invention relates to a sensor for long range surface plasmon (LRSP) spectroscopy and, in particular, to a sensor for long range surface plasmon fluorescence spectroscopy as well as to methods using such sensors for detection of analytes, in particular, biomolecules and for bio-affinity studies. The invention further relates to improved setups for such sensors.

## Description

The present invention relates to a sensor for long range surface plasmon (LRSP) spectroscopy and, in particular, to a sensor for long range surface plasmon fluorescence spectroscopy as well as to methods using such sensors for detection of analytes, in particular, biomolecules and for bio-affinity studies. The invention further relates to improved setups for such sensors.

Surface plasmon spectroscopy is an analytical tool well-suited for the characterization of interfaces and thin films as well as for sensitive detection of kinetic processes. A variety of commercial instruments based on resonant excitation of surface plasmons are available. One of the major advantages of surface plasmon spectroscopy is the fact that it allows for label-free detection of alteration of a surface, in particular, for measurement of binding events to a surface (Liebermann et al., Colloids and Surfaces A: Physicochemical and Engineering Aspects 171 (2000) 115-130).

Plasmon surface polaritons (PSP) are non-radiative, surface-bound electromagnetic modes propagating along a metal/dielectric interface with an optical field that peaks at the interface and decays exponentially both into the metal and into the dielectric. If a thin metal film is sandwiched between two dielectric media of (nearly) identical refractive indices, n_{d}, plasmon modes excited at the two opposite interfaces will interact with each other and, hence, the optical fields within the metal start to overlap, establishing a transverse standing wave. This interaction lifts the dispersion degeneracy of the two identical evanescent waves and two new coupled modes appear, a symmetrical and an antisymmetrical wave (referring to their transverse electric field distribution) (Dr. Sarid, Phys. Rev. Lett. 47 (1981) 1927-1930).

The latter one, in particular, has attracted considerable interest because its electric field across the metal film which is responsible for the energy dissipation by the lossy metal, is largely reduced and, thus, the propagation length of the mode is considerably increased. Hence, this mode is also called long-range surface plasmon (LRSP) as opposed to the short-range surface plasmon (SRSP) mode which is subject to enhanced dissipation.

By applying a special sample fabrication technique LRSP excitation has been documented for thin Ag layers with a sinusoidal surface corrugation, free-standing in air. This scheme allows for plasmon coupling to a perfectly symmetrical dielectric (air)/metal/dielectric (air) configuration, however, the sample is very fragile and totally unsuited for practical purposes, e.g., for biosensor applications in buffer solutions.

A more robust alternative is a prism-coupled Kretschmann configuration. Such configuration was also used for the design of a bio-affinity sensor using long range surface plasmon resonance (Wark et al., Anal. Chem. 77 (2005) 3904-3907). In said design, however, an intermediate layer of Cytop, an amorphous fluoropolymer, was used, which material shows swelling in water and is thus only of limited use for bioanalytical applications. A further design is described in WO 90/01166 using MgF₂ as a layer of dielectric having a refractive index lower than that of the substrate. However, the contact of the interface between MgF₂ and metal, in particular, gold or silver, is only poor, thus not providing a technically useful sensor.

Therefore, it was an object of the present invention to provide a sensor for long range surface plasmon spectroscopy and, in particular, a dielectric material allowing practical use of such sensors, e.g. for bioanalytical applications.

According to the invention said object is achieved by a sensor for long range surface plasmon spectroscopy comprising
a) a substrate,
b) an intermediate layer consisting of a polytetrafluoroethylene,
c) a metal film,
d) means to couple light into surface plasmon modes of the metal film, and
e) means for detecting light.

According to the invention the configuration required for the formation of long range surface plasmons, namely a metal film sandwiched between two dielectric media, is achieved by contacting the metal film on one side with a sample, e.g. a sample containing an aqueous bioanalyte, and on the other side with an intermediate layer. The sensor setup therefore consists of a substrate, onto which an intermediate layer is deposited, on top of which a metal film is deposited.

The intermediate layer of the present invention consists of polytetrafluoroethylene or teflon. Surprisingly, it has been found that teflon meets all requirements to be fulfilled by the intermediate layer of a long range surface plasmon sensor. The refractive index n of teflon n_{teflon} = 1.29 at λ = 6.33. The refractive index of water n_{water} = 1.33 at λ = 633 nm. The refractive index of the intermediate layer should be between 1.1 ≤ n_{intermediate} ≤ 1.5 (unless otherwise indicated, the refractive indices herein refer to λ = 633 nm). In particular, the refractive index of the intermediate layer should be between n = 1.25 and n = 1.45, in particular, between n = 1.29 and n = 1.40. Thus, teflon fulfills this criterion. Further, it has been found that a close contact between teflon and the metal film can be achieved. Further, teflon is stable in aqueous solutions. In particular, no swelling occurs.

Compared with conventional surface plasmon spectroscopy, the evanescent modes of the surface plasmons in the long range surface plasmon arrangement according to the invention are significantly enhanced at the interface and extend much further. These two effects lead to a significant enhancement of detection sensitivity.

The sensor of the invention comprises a substrate. The substrate, in particular, serves as an optical coupling element which allows for the required energy and momentum matching between the exciting photons and the surface plasmon modes. The substrate preferably is a high refractive matrial, in particular, a material having a refractive index, n_{substrate} ≥ 1.45, in particular, n_{substrate} ≥ 1.7, more preferred n_{substrate} ≥ 1.8. Suitable substrate materials, for example, are glass, e.g. glass having a refractive index of 1.5 or high refractive index glass, e.g. LaSFN9 (Schott).

However, it is also possible to use a polymer material, e.g. polymethylmethacrylate (PMMA) as a substrate. Depending on the configuration, the substrate can have different shapes, e.g. it can be a prism, sheet or plate. In the preferred Kretschmann configuration, the substrate is a prism.

In contrast to sensors for conventional surface plasmon spectroscopy, wherein a metal layer or a metal film is applied onto the substrate directly, an intermediate layer consisting of polytetrafluoroethylene is present on the substrate according to the invention. Said intermediate layer preferably has a thickness of from 200 nm to 2000 nm, in particular, from 400 nm to 1200 nm. The refractive index of the intermediate layer (herein also referred to as cladding material or cladding layer) is preferably adjusted so as to be identical or very similar to the refractive index of the sample to be measured. Since water has a refractive index n_{water} = 1.33 at λ = 633 nm and often aqueous solutions are used as the superstrate when measuring biological samples, a polytetrafluoroethylene having a refractive index in that range is preferably used according to the invention. When using water as the superstrate, a maximum field intensity at the interface was calculated at n_{intermediate} = 1.36, namely at a thickness d = 500 nm of the intermediate layer. The asymmetry in the refractive index configuration relative to the value for water is a direct mirror image of the asymmetry of the thicknesses due to the coupling scheme, e.g. due to a Kretschmann coupling scheme.

According to the invention a metal film is disposed on the intermediate layer, preferably a noble metal film. Suitable metals, for example, are gold, silver, platinum, palladium, aluminum, nickel, copper, zinc, cadmium and/or mixtures and/or alloys of these metals. Preferably, the metal substrate is made of gold or silver and, more preferably, of gold. Although Au has an intrinsically larger imaginary part ε" of its refractive index in the visible range, this metal, compared to Ag, is most preferred due to its high inertness in physiological buffer solutions. For this reason, Au, in particular, can be used in biosensor applications. The metal film or metal layer preferably has a thickness of 10 to 100, in particular, 30 to 60, and more preferred, 40 to 50 nm.

The sensor of the invention further comprises means to couple light into surface plasmon modes of the metal film. To this end, a laser is preferably used as a photon source.

Finally, the sensor of the invention comprises means for detecting light, in particular, an optical detector. In one embodiment, light reflected from the metal substrate is measured by the sensor. In a more preferred embodiment, the sensor of the invention is a sensor for long range surface plasmon fluorescence spectroscopy and, as such, comprises means for detecting light generated by long range surface plasmon-induced fluorescence.

While it is possible to use the sensor of the invention comprising the above-described setup of substrate, intermediate layer and metal film directly, e.g. by immersion into an analyte solution, it is preferred that the sensor comprises a cell, in particular, a flow cell for applying an analyte solution.

According to the invention an analyte in a sample or an interaction, especially a bio-affinity interaction, can be measured by binding analytes to the metal film and by the change in the surface plasmon modes caused thereby. To this end, preferably, the angular change in reflectivity is measured. When measuring diffraction or long range surface plasmon-induced fluorescence, the interaction of analytes directly with the metal film can be determined according to the invention. Preferably, however, the sensor has f) at least one cover layer on top of the metal film. The cover layer preferably has a thickness between 10 nm to 2000 nm, more preferably from 30 nm to 1000 nm, most preferably from 100 to 600 nm. The cover layer can serve to prevent fluorophores from being quenched by the proximity of the metal substrate, in particular, in case of measuring long range surface plasmon-induced fluorescence. In that case the cover layer preferably consists of an inert material, e.g. polystyrene. Preferably, however, the cover layer serves the purpose of providing binding sites for analyte, for example, by the presence of receptors for an analyte. Suitable receptors, for example, are antbodies. Suitable materials for such cover layer, for example, are dextran or a hydrogel. A major advantage of long range surface plasmons is the extended range with a penetration depth of several hundred nanometers and, thus, up to an order of magnitude higher than for normal plasmon resonance modes. In biosensor applications, this means that thicker sensor coatings allow for more analyte molecules being coupled to the functionalized transducer surface which contribute to the signal. The cover layer can act as a three-dimensional receptor array.

In an especially preferred embodiment, the present invention relates to a sensor for long range surface plasmon fluorescence spectroscopy, comprising:
a) a substrate,
b) an intermediate layer consisting of a polytetrafluoroethylene,
c) a metal film,
d) means to couple light into surface plasmon modes of the metal film, and
e) means for detecting light generated by long range surface plasmon-induced fluorescence.

The preferred materials, arrays and embodiments thereby are as described above, whereby, however, detection is effected via fluorescence light.

The energetic degeneracy of two surface plasmon modes, resonantly excited at the two sides of an ultrathin (noble) metal layer in contact with two (nearly) identical dielectric media, interacting via their overlapping electromagnetic films within the sufficiently thin metal film will be lifted and two new coupled modes, the long range and the short range surface plasmons, respectively, appear in the angular reflectivity spectrum recorded, e.g., in the Kretschmann prism coupling configuration. The former ones, in particular, with their antisymmetrical electric field distribution within the metal leading to a very narrow angular resonance width reflecting the significantly reduced damping and, hence, much larger propagation length are of particular interest.

The use of long range surface plasmon (LRSP) modes as the excitation light source for fluorescence detection schemes in biosensing applications offers significant advantages over the classical excitation via normal surface plasmons. The enhanced optical field of LRSP at the metal/dielectric (water) interface as well as the larger penetration depth of their evanescent field reaching further into the analyte solution provide significant enhancements in the detection of fluorescence intensities.

In said embodiment, long range surface plasmons are used in the surface plasmon field enhanced fluorescence detection scheme for recording of analyte molecules. Preferably, the analytes carry a chromophore or fluorophore label, or such a label is attached to the analyte before, during or after binding to the sensor surface. For detection, the analytes are bound from solution to the sensor surface, in particular, to a functionalized sensor surface which e.g. carries receptors for a certain analyte. Upon approaching the water/metal interface from the bulk face, the fluorophores will be excited by the evanescent modes of the surface plasmons with the optical intensity of the LRSP field being significantly enhanced at the interface and extending much further into the analyte solution compared with SPR (surface plasmon resonance).

The two most relevant parameters for long range surface plasmon fluorescence spectroscopy are field intensity and decay length of LRSP. With an increasing refractive index of the intermediate layer, the field intensity at the metal/water interface increases up to a maximum (e.g. a maximum of n_{teflon} = 1.36 was found for a Kretschmann configuration using a 500 nm teflon intermediate layer and a 40 nm Au metal layer). The decay length, on the other hand, decreases continuously across the whole refractive index. Since the sensitivity of the analyte detection depends on the local field enhancement of the evanescent wave and also on its extension into the aqueous analyte solution, the optimum situation is given by a compromise between the highest possible field and the decay length which is not too much reduced. However, since the decay length does not vary too dramatically over a relatively broad range of n_{teflon}, practically a value close to the maximum field intensity is preferably used.

Using reflectivity scan, it was found that the curve for LRSP excitation is much narrower and located at a lower angle compared to SPR excitation. Further, a significantly enhanced fluorescence emission intensity was seen for LRSP excitation compared to normal surface plasmon fluorescence spectroscopy. Due to the larger penetration depth of long range surface plasmon modes analytes bound within a thick cover layer (e.g. up to 2000 nm thick) can be measured with this arrangement. A porous or gel-like cover layer providing multiple receptor sites for the analyte in a three-dimensional fashion, therefore, allow for a large amount of fluorophore-labeled analyte molecules being coupled to the surface and being read out by the extended plasmon field due to the evanescent character of the excitation light. The disadvantage associated with the large penetration depth and, thus, for this de-damping, i.e. the reduced impact of any bound analyte on the dispersion of surface plasmon modes, does not apply to fluorescence detection. Thus, the combination of long range surface plasmon excitation with fluorescence detections offer a unique and highly sensitive analytic tool.

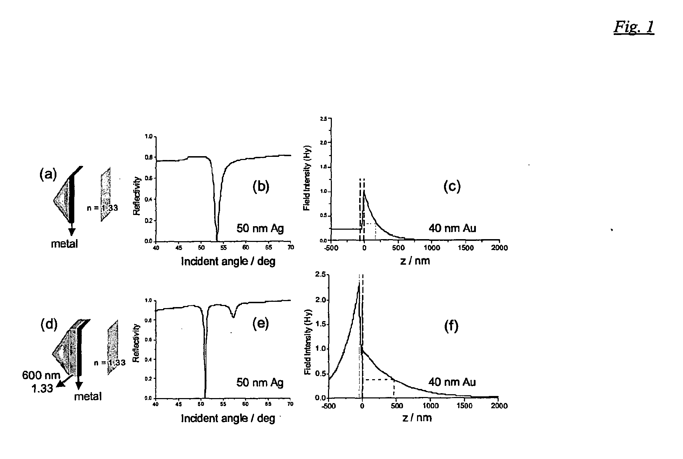

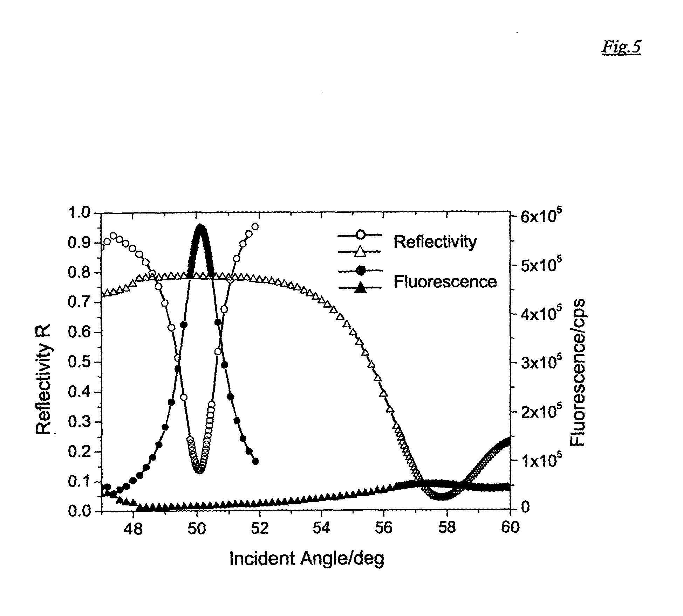

The application of long range surface plasmons offers a number of relevant advantages for the development of optical biosensors. The first one concerns the fact that the (Davidov) splitting of the two coupled plasmon modes leads to a situation in which the long range mode is excited at a significantly lower angle than the normal PSP wave. From a practical point of view this is particularly important when working with polymers as the prism material in the Kretschmann configuration. Here, the reduced range of available refractive indices leads to relatively high coupling angles and any means to reduce them simplifies the optical setup enormously. The details of this coupling angle shift, of course, depend on the exact nature of the optical architectures involved, i.e., the thickness and the refractive index of the various layers ivolved. In the simulations given in Fig. 1 for the case of Ag as the resonating metal this accounts for only as little as three degrees, however, as seen in the experiments with Au, presented in Fig. 5 the coupling angle can drop from θ=58° to θ=50° which is significant.

When using LRSP modes for the excitation of chromophores in fluorescence detection schemes the advantage is twofold: on the one side the optical field enhancement at the metal/dielectric interface can account for more than an order of magnitude which translates directly into an enhancement in sensor sensitivity. Again the details depend on the optical architecture and a disadvantage of the Kretschmann configuration is the fact that this setup is intrinsically asymmetric. A complete match of the phase velocities of the two interacting surface plasmons which would be required for the maximum coupling is impossible. However, the experiments showed that by the appropriate choice of the cladding material with an optimized refractive index and thickness, the achievable enhancement is substantial compared with the mere SPR excitation of the chromophores (cf. Fig 5).

A way to further improve the enhancements obtainable at resonance is to use an optical architecture with a complete index symmetry and an optimized material and thickness for the metal layer. This is achievable by using grating couplers for the excitation of LRSP and fluorescence. Any (sufficiently) thick cladding material that can be processed so as to exhibit a sinusoidal surface corrugation, e.g., by hot embossing should we deal with a polymeric material, can be coated by the thin metal and then used in buffer. The robustness needed for biosensor application can be provided by a solid material with the refractive index of water and a grating-like surface corrugation.

In a further aspect, the invention relates to a grating coupled long range surface plasmon spectroscopy sensor comprising
a) a substrate,
b) an intermediate layer,
c) a metal film having a grating structure,
d) means to couple light into surface plasmon modes from the back side of the metal film, and
e) means for detecting light.

In the case of this aspect the materials and preferred embodiments are the same as described above. Grating coupled long range surface plasmon excitation allows for laser beam coupling from the back side. Thereby it is not necessary to use a prism, but the substrate is preferably a flat transparent support such as a plate or layer. A grating structure is sandwiched between the intermediate layer, also termed cladding layer, and the superstrate, e.g. an aqueous buffer solution in case of a biosensor configuration. In order to allow for efficient coupling between the surface plasmons excited at the two metal/dielectric interfaces the (noble) metal layer needs to be sufficiently thin and the cladding layer should have a refractive index similar to the value of the analyte solution. The thickness of the cladding layer should exceed the penetration depth of the LRSP, i.e., it should preferably be thicker than ca. 1 µm, but can be supported by a solid yet transparent substrate material. Specifically, the metal film having a grating structure preferably is from 10 to 100 nm, more preferably from 40 to 50 nm thick. The refractive index of the cladding layer preferably is between 1.25 and 1.45, more preferably between 1.3 and 1.4. A preferred material for the cladding layer is polytetrafluoroethylene, as explained in detail above. While the thickness of the cladding layer preferably can be from 100 nm to 2 µm, it is especially preferably at least 500 nm, and even more preferred at least 1,000 nm.

One major advantage of this mode of exciting LRSP is the fact that the resonant laser coupling can occur from the back side. In the classical grating coupling geometry for regular SPR excitation the laser has to come from the front side (because the metal layer is too thick to be penetrated by the light from the back) and, hence, the laser light has to pass through the sample cell. "From the back side" means that the light which is coupled into the surface plasmon modes of the metal film passes first through the substrate, then through the intermediate layer to finally reach the metal film.

This configuration is particularly advantageous in combination with fluorescence detection. In the case of conventional excitation from the front side, the laser light is passed through the sample to the metal layer. For a surface plasmon fluorescence spectroscopic mode of operation this inevitably means that all analyte molecules carrying a chromophore even the ones in the bulk solution will be excited and emit fluorescence photons. The consequence for the sensing protocol is that after injection of the analyte solution the fluorescence intensity jumps to a value given by the bulk analyte concentration even in the absence or just prior to any binding reaction of the analyte molecules to the affinity binding sites engineered at the sensor surface. The surface binding reaction, hence, can only be monitored on top of a strong background signal. In the inventive setup, however, the laser light coupling from the back side of the sensor chip passes only through the substrate and the cladding layer before exciting LRSPs.

For producing a thin metal film having a grating structure, preferably, a thin metal layer is evaporated onto the periodically corrugated surface of the cladding layer. Surface corrogation can be achieved, for example, by hot embossing or micro-molding of the cladding material.

The invention is further explained by the Figures and the following Examples.

The Figures show:
**Fig.1:** (a) Schematics of the Kretschmann configuration for surface plasmon excitation; (b) angular reflectivity scan simulated for a high refractive index prism (n=1.85 @ λ=633 nm, 50 nm Ag with ε = -17.+0.7i, in contact water of n=1.33); (c) optical field distribution, H_{y}-versus-z, normal to the interface for the architecture given in (a) but calculated for 40 nm (cf the broken blue lines) of Au (ε= -12.3+1.29i) as the metal layer. For easier comparison with the corresponding field distribution of the long range surface plasmon (LRSP) modes, cf. (f), the field is normalized to its value at the metal/water interface; (d) Kretschmann configuration for the excitation of LRSP: onto the high index prism first a layer of a low index cladding layer is deposited (here assumed with d=600 nm and n=1.33), followed by the metal coating (Ag with d=50 nm), operating in water; (e) reflectivity scan simulation for the architecture given in (d). Note the two minima at lower and at higher angles, respectively, relative to the parent resonance in the 'normal' SPR (cf. (b)); (f) optical field distribution for a layer architecture similar to the one given in (d), however, calculated for a thickness and refractive index of the cladding layer of d=500 nm and n=1.29, and a thin Au layer of d=40 nm and ε= -12.3+1.29i, respectively, in order to simulate a situation close to the experimental conditions (cf. below). Note the substantial asymmetry in the field distribution, however, with a significantly enhanced decay length into the analyte solution (in order to better show this difference to normal SPR (cf. (c)) we scaled both fields to the value at the metal/water interface).

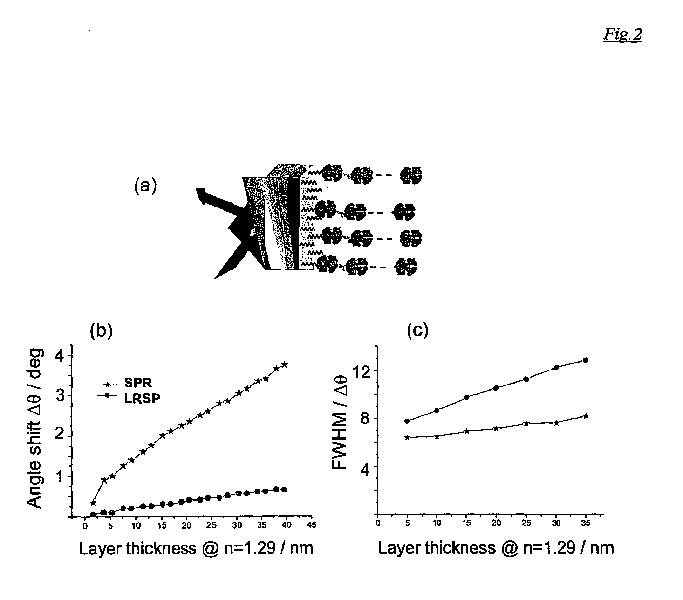

**Fig.2:** (a) Multilayer architecture assembled by the alternate adsorption/deposition of a biotinylated antibody and streptavidin, characterized in both, normal SPR and LRSP spectroscopy, respectively; (b) angle shift of the resonance peaks upon the build up of the multilayers (assuming for this loosely packed protein film a refractive index of n=1.29); (c) figure of merit for the sensitivity of the two techniques for protein binding studies, i.e., Δθ/FWHM as a function of the layer thickness.

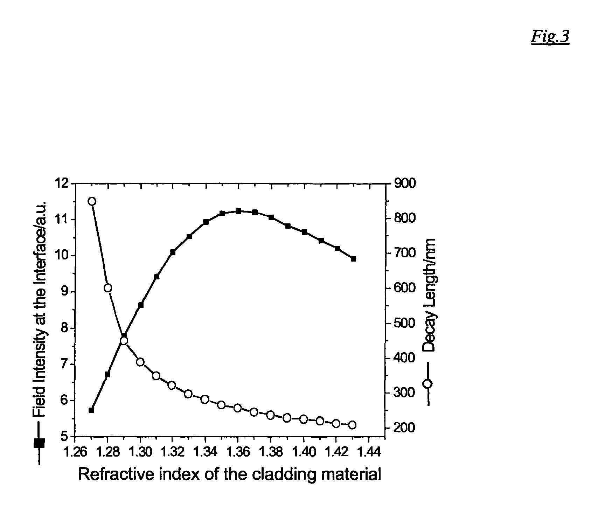

**Fig.3:** Simulations of the dependence of the optical field intensity at the metal/water interface ( -■- ), and of the decay length ( -○- ) on the refractive index of the cladding material in the Kretschmann configuration for LRSP excitation.

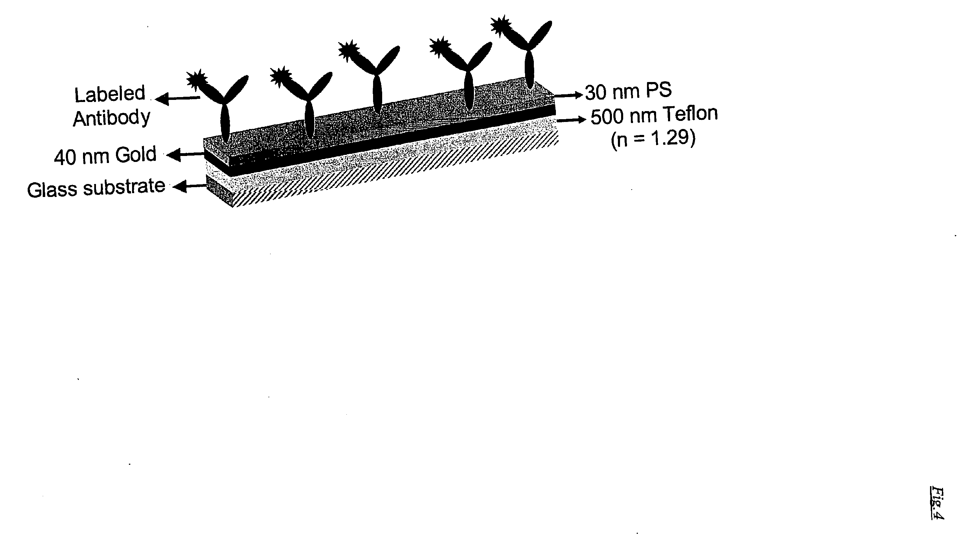

**Fig.4:** Test sample assembled for the evaluation of the emitted fluorescence intensity monitored upon PSP- or LRSP-excitation of the chromophores, respectively. For the LRSP case the Au metal layer was evaporated onto a 500 nm thick teflon cladding layer, spin-coated onto the high index glass substrate. The 30 nm of polystyrene prevents the fluorophores from being quenched by the proximity of the metal substrate (which would act as a broadband acceptor layer).
**Fig.5:** Comparison of the angular reflectivity scans recorded with normal SPR (open cycles) and in the LRSP configuration (open circles), together with the simultaneously measured angular fluorescence intensity curves (full triangles for SPFS and full circles for the LRSP fluorescence, respectively).

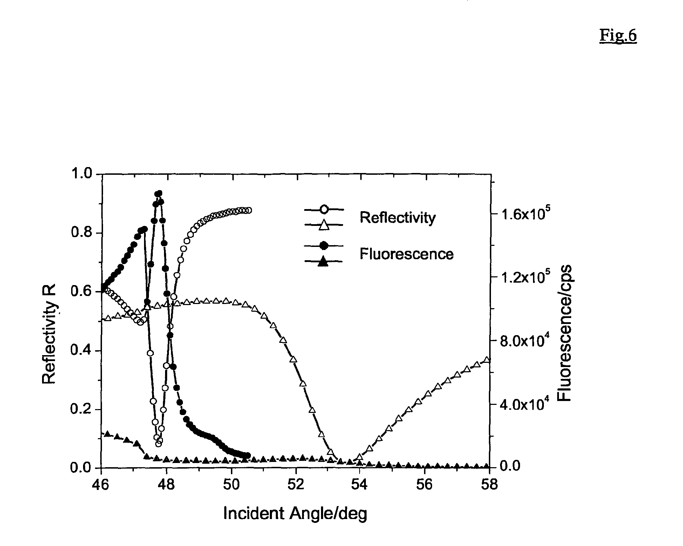

**Fig.6:** Comparison of the angular reflectivity scans recorded with normal SPR (open circles) and in the LRSP configuration (open triangles), together with the simultaneously measured angular fluorescence intensity curves (full circles for SPFS and full triangles for the LRSP fluorescence, respectively). The sample consisted of the prism, a 500 nm thick cladding layer in the case of the LRSP excitation, a Au layer of 40 nm in each case, a 500 nm teflon coating on top of the Au in both cases, and the chromophore labeled protein layer adsorbed from solution.

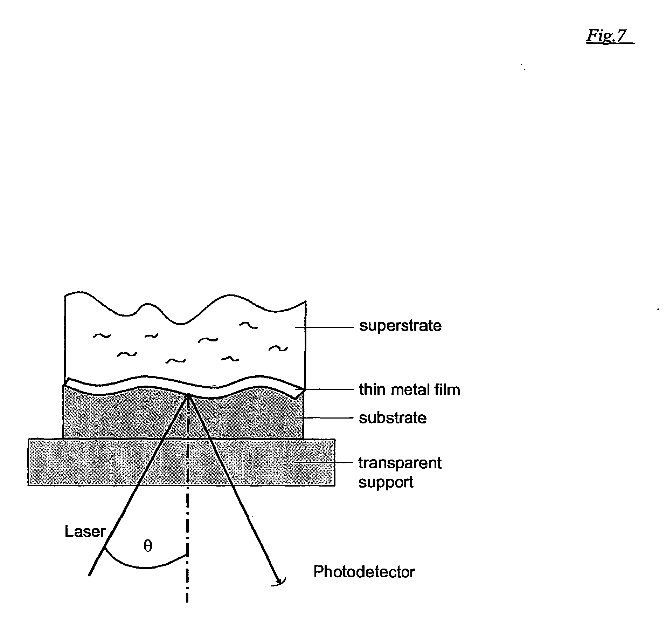

**Fig. 7:** Excitation of LRSP from the back side via a grating structure

### Examples

### Example 1: Theoretical calculations

A preferred format to excite PSP by light is the Kretschmann configuration with a prism as the coupling element. This allows for the required energy and momentum matching between the exciting (laser) photons and the surface plasmon modes, provided the refractive index of the prism is sufficiently high compared to the dielectric medium in contact with the metal surface. For (bio-)sensor applications with the transducer operating typically in water (n=1.33 @ λ=633nm) this requires that the thin metal layer that guides the surface wave is directly evaporated onto the high index glass, e.g., LaSFN9 (Schott) prism base (W. Knoll, Ann. Rev. Phys. Chem. 49 (1998) 569-638). This coupling geometry is schematically given in Figure 1 (a). A typical angular reflectivity scan simulated for this configuration with a laser wavelength of λ=633 nm and for a 50 nm thin Ag layer in contact to water is given in Figure 1(b). The resonant excitation of the PSP mode is clearly seen as the narrow dip in the reflectivity spectrum. One important feature of this bound wave is the extend of its evanescent field (at resonance) into the dielectric medium. This is simulated in Fig. 1(c) for the architecture of (a), but simulated for 40 nm of Au in order to match to the experimental realization, cf. below, showing the typical penetration depth of PSP modes in the range of L_{z}= 178 nm (cf. the broken lines in 1(c)). The evanescent character of this surface plasmon mode guarantees the surface sensitivity and selectivity of the technique which does not suffer from bulk contributions to the detected signal, e.g., by scattering from larger objects like cells. On the other hand, the interest in using the full extend of this evanescent wave in order to maximize the transducer sensitivity has lead to the development of quasi-three dimensional binding matrices on the sensor surface realized, e.g., via the grafting of a carboxylated dextran layer which can be further functionalized via the appropriate coupling chemistries by the analyte binding sites of interest ( S. Löfas et al., J. Chem. Soc., Chem. Commun. 21 (1990) 1526-1528). By matching the thickness of the dextran brush to the decay length of the SPR mode the effective interfacial analyte density could be enhanced by a factor of 3-5.

In the prism-coupled Kretschmann configuration, a high-index glass prism is first coated with a low refractive index cladding layer (e.g., with teflon of n≈1.33 and a thickness of d=600nm), followed by the deposition of a 50 nm thin Ag layer. The simulated angular reflectivity spectrum of such a sandwich sample in water (n=1.33 @ λ=633nm) is given in Figure 1(e). The 2 modes, i.e., the LRSP and SRSP, can be seen as the sharp dip in the reflectivity spectrum at small angles and the much more shallow and broad feature at higher angles, respectively, in roughly symmetrical angular positions relative to the normal SPR (cf. Fig. 1 (b) and (e)). The magnetic field profile, H_{z}, of the LRSP normal to the planes of the sandwich layers, scaled to its value at the metal/analyte solution (water) interface is given in Figure 1(f). For this simulation we chose 40 nm gold as the metal layer and a refractive index for the teflon cladding of n=1.29 in order to match to the actual experimental conditions (cf. below). The asymmetrical refractive index profile of the cladding layer as the substrate and H₂O as the superstrate with their slightly different refractive index and also with their different thicknesses (500 nm vs. infinite, respectively) results in the rather asymmetrical field distribution on both sides of the metal slap.

The reduced damping which is responsible for the extended propagation of LRSPs is also the reason for the narrow angular resonance seen in the reflectivity spectrum (cf. Fig. 1(e)). This has triggered the interest in using these modes also in optical biosensors for detecting thin coatings covering the metal film, e.g., by an adsorbed protein or DNA analyte layer.

### Example 2: Multilayer assembly comprising biotinylated antibodies and streptavidin

The sharp dip in the resonance with its angular position shifting upon the binding of biopolymers to slightly higher values should result in a change in reflectivity at a fixed angle of observation which should be substantially larger for a LRSP mode than for a classical SPR wave. However, the extension of the LRSP optical field reaching out much farther into the buffer solution reduces the effect of a thin adsorbed coating on the dispersion of the plasmon mode and, hence, the shift of the mode, Δθ, is considerably lower than in SPR. This is demonstrated in an experiment in which we build a multilayer assembly by the alternate adsorption of biotinylated antibodies and streptavidin (cf. Figure 2 (a)). The angle shift per double layer is much more pronounced for the regular surface plasmon mode (Fig. 2 (b)), however, together with the FWHM values for both systems the relevant Figure of Merit (FoM), i.e., the ratio between the shift, Δθ, and the width (FWHM) of the two types of modes is only slightly improved for LRSP (cf. Fig 2 (c)).

### Example 3: Optical field intensity and decay length

The optimal experimental configuration was determined by simulating the dependence of the field intensity and the decay length of long range surface plasmons on the refractive index of the intermediate layer or cladding material. The simulations were performed assuming a high refractive index material for the coupling prism, LaSFN9, a d=500 nm thin teflon AF 1600 cladding layer, 40 nm Au as the surface plasmon active layer, and water (n_{water}=1.33 @ λ=633nm) as the superstrate. The refractive index of the teflon was varied between n_{teflon}=1.29 and n_{teflon}=1.43 following the specifications of the commercial material's provider. In a separate simulation analysis the optimum for LRSP excitation in Au was found to be around d_{Au}=40nm. The results of the simulations are given in Figure 3: With increasing refractive index of the cladding layer the field intensity at the Au/water interface increases monotonically until at about n_{teflon}=1.36 a maximum value is reached. The asymmetry in this refractive index configuration relative to the value for water is a direct mirror image of the asymmetry of the thicknesses given by the Kretschmann coupling scheme.

The decay length, on the other hand, decreases continuously across the whole refractive index range investigated. Considering that the sensitivity of the analyte detection depends on both, the local field enhancement of the evanescent wave and its extension into the aqueous analyte solution the optimum experimental situation is given by a compromise between the highest possible field and a decay length which is not too much reduced. From a practical point of view this implies that the issue of the exact refractive index of the cladding is not so crucial since the product of the intensity times the decay length does not vary too dramatically over a relatively broad range of n_{teflon}.

### Example 4: Long range surface plasmon fluorescence spectroscopy

In order to demonstrate the increased sensitivity for biosensor applications when using LRSPs as the surface mode that excites fluorescently labeled analyte molecules bound to the sensor surface we prepared a simple test sample with the architecture given in Figure 4: onto the high-index glass slide a cladding layer of 500 nm of teflon was spin-coated, followed by the evaporation-deposition of 40 nm Au. In order to render the surface hydrophobic and position the fluorophores of the final antibody layer sufficiently away from the metal layer a thin poly(styrene) layer of d=30 nm was spin-coated on top of the Au layer. Finally, the analyte layer was prepared by adsorbing from solution chromophore (Cy5-) labeled antibodies to the PS surface. In order to compare this to the intensity measured by normal SPFS we also prepared a second sample of identical analyte architecture, i.e., also with the thin poly(styrene) buffer layer and also coated by the same amount of dye-labeled protein, however, without the teflon cladding and evaporating the Au layer at a thickness of d=50 nm in order to optimize the yield for the SPFS recording. The reflectivity scans for both samples are given in Figure 5. The curve for the LRSP excitation is much narrower and located at a lower angle, as expected from the simulation presented in Fig. 1 (b) and (e). What is also very obvious is the much higher fluorescence emission intensity for the case of LRSP excitation compared to normal SPFS. By evaluating the peak intensities above the background level one obtains a 22 times higher fluorescence for the LRSP excitation, in good agreement with the theoretical expectations. Also in quantitative agreement with the physics of (long range) surface plasmon optics is the finding that the angular position of the fluorescence peak intensity is at slightly higher values compared to the position of the peak intensity for SPFS which for Au is shifted considerably to lower angles.

The enhancement for LRSP excited fluorescence becomes even more obvious if one places the chromophore layer with the analyte further away from the Au surface. As mentioned above, the weaker decay of the LRSP field away from the interface can be seen in the difference of fluorescence excitation by the two modes of operation if the chromophores are placed at a certain distance away from the interface. To this end we prepared two samples, one for normal SPR and another one suited for LRSP excitation. In both cases the test analyte, i.e., the chromophore labeled antibodies, were adsorbed to a 500nm thick teflon layer on top of the Au substrate in order to probe the differences in the decay lengths of the two plasmon fields. As expected the measured fluorescence excited by the normal SPR almost completely decayed to a very low value, barely detectable above the background (Fig. 6, full triangles) whereas the fluorescence intensity of the identical protein layer probed by the LRSP field still shows a very high value (Fig 6, filled circles). The peak intensity ratio in this case amounts to a factor of 33!

## Claims

1. A sensor for long range surface plasmon spectroscopy comprising
a) a substrate,
b) an intermediate layer consisting of a polytetrafluoroethylene,
c) a metal film,
d) means to couple light into surface plasmon modes of the metal film, and
e) means for detecting light.

2. Sensor according to claim 1 for long range surface plasmon fluorescence spectroscopy, comprising means for detecting light generated by long range surface plasmon-induced fluorescence.

3. Sensor according to claim 1 or 2, wherein the substrate has a refractive index n ≥ 1.6, in particular, n ≥ 1.8.

4. Sensor according to any of the preceding claims, wherein the substrate is a glass substrate, in particular, LaSFN9 or a polymer substrate, in particular, PMMA (polymethylmethacrylate).

5. Sensor according to any of the preceding claims, wherein the substrate is a prism, sheet or plate.

6. Sensor according to any of the preceding claims, wherein the intermediate layer has a refractive index of 1.1 ≤ n ≤ 1.5, in particular, of 1.25 ≤ n ≤ 1.45.

7. Sensor according to any of the preceding claims, wherein the intermediate layer has a thickness from 200 nm to 2000 nm, in particular, of 400 nm to 1200 nm.

8. Sensor according to any of the preceding claims, wherein the metal film is a noble metal film, particularly, Au or Ag.

9. Sensor according to any of the preceding claims, wherein the metal film has a thickness of 10 to 100, in particular, of 30 to 60 nm.

10. Sensor according to any of the preceding claims, wherein the means to couple light into surface plasmon modes comprise a laser.

11. Sensor according to any of the preceding claims, wherein the means for detecting light is an optical detector.

12. Sensor according to any of the preceding claims, further comprising a cell, in particular, a flow cell for applying an analyte solution.

13. Sensor according to any of the preceding claims, further comprising
f) a cover layer.

14. Sensor according to any of the preceding claims, wherein the cover layer has a thickness from 10 nm to 2000 nm.

15. Sensor according to any of the preceding claims, wherein the cover layer comprises polystyrene, dextran and/or a hydrogel.

16. Sensor according to any of the preceding claims, wherein the cover layer is porous.

17. Sensor according to any of the preceding claims, wherein the cover layer comprises receptors for an analyte to be detected.

18. A method for detecting an analyte and/or for measuring interactions using long range surface plasmon spectroscopy, comprising contacting an analyte solution with a sensor according to any of the preceding claims, coupling light into surface plasmons modes of the metal film and detecting light.

19. Method according to claim 18, wherein an aqueous analyte solution is contacted with the sensor.

20. Method according to claim 18, using long range surface plasmon fluorescence spectroscopy.

21. A grating coupled long range surface plasmon spectroscopy sensor comprising
a) a substrate,
b) an intermediate layer,
c) a metal film having a grating structure,
d) means to couple light into surface plasmon modes from the back side of the metal film, and
e) means for detecting light.

22. Sensor according to claim 21, wherein the intermediate layer has a thickness of ≥ 1 µm.

23. Sensor according to claim 21, wherein the metal film having a grating structure has a thickness of 30 to 60 nm.

24. Sensor according to claim 21, wherein the intermediate layer comprises polytetrafluoroethylene.

25. Sensor according to any of claims 21 to 24 for grating coupled long range surface plasmon fluorescence spectroscopy.
